# EUROPÄISCHE PATENTSCHRIFT

(11) **EP 0 656 806 B1**
(45) Veröffentlichungstag und Bekanntmachung des Hinweises auf die Patenterteilung: **25.09.1996**
(21) Anmeldenummer: 93919090.6
(22) Anmeldetag: 18.08.1993
(51) Int. Cl.: B01D 53/50, B01D 53/22, B01D 61/14, C01D 5/16, C02F 9/00

(54) **RAUCHGASENTSCHWEFELUNG**
DESULPHURIZATION OF FLUE GASES
DESULFURATION DES GAZ DE FUMEE

(30) Priorität: 27.08.1992 DE 4228471
(43) Veröffentlichungstag der Anmeldung: 14.06.1995
(73) Patentinhaber: Henkel Kommanditgesellschaft auf Aktien, 40191 Düsseldorf (DE)
(72) Erfinder: YÜKSEL, Levent, D-40597 Düsseldorf (DE); JOHANNISBAUER, Wilhelm, D-40699 Erkrath (DE); NEUKIRCH, Herbert, D-40625 Düsseldorf (DE); SCHWIECKER, Alfred, D-40593 Düsseldorf (DE)
(86) Internationale Anmeldenummer: EP9302206
(87) Internationale Veröffentlichungsnummer: WO9405400

(56) Entgegenhaltungen:
- EP-A- 0 453 005
- WO-A-86/05705
- US-A- 3 944 650
- US-A- 4 820 391

## Beschreibung

Die Erfindung betrifft ein Verfahren zur Rauchgasentschwefelung. Dabei wäscht man das Rauchgas, bevorzugt nach einer Reinigung von Flugasche und anderen festen Partikeln, mit einer Alkali enthaltenden Lauge, insbesondere Natronlauge. Dann kristallisiert man das nach einer Oxidationsstufe erhaltene Alkalisulfat.

Eine Vielzahl von Rauchgasentschwefelungsverfahren ist bekannt. Durchgesetzt haben sich dabei insbesondere die Naßverfahren, vorzugsweise auf Kalkhydrat- und Kalksteinbasis. Ein Problem bei sämtlichen Rauchgasreinigungsverfahren besteht in der Verwendung und der Aufarbeitung der Rückstände, also bei den Naßverfahren der verbrauchten Waschlauge. Die mit einer Kalkwäsche arbeitenden Verfahren liefern Rauchgasgips, der bei entsprechender Reinheit weiter verwertet werden kann.

Auch bei der Natronlaugen-Wäsche des Rauchgases wird eine Verwertbarkeit des schließlich entstehenden Natriumsulfats angestrebt. Es zeigt sich jedoch, daß trotz einer vor der Wäsche vorgenommenen Reinigung des Rauchgases von Flugasche, unverbrannten Bestandteilen, z.B. Kohleteilchen bei Rauchgas aus der Kohleverbrennung, und Schwermetallen das nach der Kristallisation erhaltene, ansonsten weiße Natriumsulfat von dunklen Partikeln verunreinigt ist, die den Wert des Produktes stark vermindern. Ein Einsatz des Salzes z. B. in Waschmitteln ist damit nicht möglich.

Die Abtrennung der feinen dunklen Partikel (Stippen) aus der Waschlauge mittels herkömmlicher Filtration ist nicht möglich. Die relativ kleinen Partikel-Durchmesser erfordern sehr feine Filter, die rasch verstopfen. Auch eine Reinigung des nach der Kristallisation erhaltenen Feststoffes, z.B. durch Sichten, zeigt keine Erfolge, da die festen feinen Verunreinigungen häufig Kristallkeime für Natriumsulfat bilden und in die Kristalle mit eingeschlossen werden.

Eine Reinigung der Waschlauge mittels statischer Mikrofiltration wäre zwar prinzipiell möglich, aber wegen der sehr starken Verdünnung der Feststoffe in der Waschlauge, nämlich mit etwa 0,2 g/l sehr unwirtschaftlich, zumal der sich bildende Filterkuchen einen sehr hohen Filterwiderstand aufbaut.

Der Erfindung liegt daher die Aufgabe zugrunde, das o.g. Verfahren zur Rauchgasentschwefelung zu verbessern, so daß auf wirtschaftliche Weise ein rein weißes, von dunklen Verunreinigungen freies Alkalisulfat erhalten wird. Das Verfahren soll nur wenig zusätzlichen Bedienungsaufwand erfordern und kostengünstig zu betreiben sein.

Diese Aufgabe wird erfindungsgemäß dadurch gelöst, daß man nach der Wäsche des Rauchgases die Waschlauge, insbesondere kontinuierlich, in einem aus einer Sedimentation und einer Membranfiltration, bevorzugt einer Querstrom-Membranfiltration, kombinierten Aufarbeitungsschritt reinigt, wobei man die Feststoffe im aus der Membranfiltration erhaltenen Konzentrat durch Sedimentieren zumindest teilweise abtrennt, die Restflüssigkeit zur Membranfiltration zurück- und damit im Kreis führt und das aus der Membranfiltration erhaltene Permeat weiterverarbeitet.

Dabei kann die mit der Sedimentation kombinierte Membranfiltration zwischen der Rauchgaswäsche und der Oxidationsstufe oder zwischen der Oxidationsstufe und der Kristallisation geschaltet sein. Als Membran wird vorzugsweise eine Mikrofiltrationsmembran eingesetzt.

Die aus der extremen Verdünnung der Verunreinigungen und des sehr kleinen Partikeldurchmessers resultierenden Probleme werden im erfindungsgemäßen Verfahren auf eine wirtschaftliche Weise gelöst. Wie gezeigt werden konnte, sind sehr hohe Standzeiten möglich. Der Bedienungsaufwand ist sehr gering. Das nach der Oxidationsstufe erhaltene, aus Natriumsulfat bestehende Kristallisat ist nach der erfindungsgemäßen Reinigung der Waschlauge von sehr guter Qualität, so daß es zum Einsatz in vielen Anwendungen insbesondere in Wasch- und Reinigungsmitteln geeignet ist.

Die zu reinigende Waschlauge kann entweder direkt in die Sedimentation oder direkt zur Mikrofiltration geleitet werden. Es ist aber bevorzugt, daß man die zu reinigende Waschlauge zuerst der Membranfiltration unterwirft. In diesem Fall wird die Waschlauge nämlich erst nach einer Aufkonzentrierung zur Sedimentation geleitet und damit ein besseres Sedimentationsverhalten und ein ruhigerer Betrieb im Sedimentationsbehälter erreicht.

Die relativ starke Verdünnung der dunklen Verunreinigungen in der Waschlauge läßt eine relativ starke Aufkonzentrierung bei der Membranfiltration als wirtschaftlich wünschenswert erscheinen. Daher wird vorgeschlagen, daß man bei der Membranfiltration ein Verhältnis von Permeat und Konzentrat von mindestens 10 einstellt.

Zur einfachen und bedienungsfreundlichen Reinigung der Membran spült man diese vorzugsweise mit dem Permeat zurück. Die Rückspülung kann z.B. automatisch und periodisch vorgenommen werden.

Um ein besonders reines Produkt Natriumsulfat zu erhalten, setzt man vorzugsweise Membranen mit Porendurchmessern ein, die mindestens um den Faktor 5 kleiner als der mittlere Durchmesser der in der Waschlauge suspendierten Partikel sind. Diese Maßnahme hat auch den Vorteil, daß eine Verstopfung der Membran weniger wahrscheinlich ist.

Erfindungsgemäß können Membranen aus einem Polymer, insbesondere aus Polypropylen, eingesetzt werden. Die Membran kann aber auch aus Keramik, insbesondere aus Aluminiumoxid oder Aluminiumoxid/Zirkonoxid oder Graphit/Zirkonoxid oder Siliciumcarbid bestehen.

Die Erfindung betrifft auch eine Anlage zur Rauchgasentschwefelung mit einem Gaswäscher, der mit einer Alkali enthaltenden Lauge, insbesondere Natronlauge betreibbar ist und dem bevorzugt eine Abtrennstufe für Flugasche und andere Feststoffe aus dem Rauchgas vorgeschaltet ist und dem eine Oxidationsstufe zur Herstellung von Alkalisulfat und ein Kristallisator nachgeschaltet ist.

Zur Lösung der obengenannten erfindungsgemäßen Aufgabe ist in dieser Anlage zwischen dem Wäscher und dem Kristallisator mindestens ein Sedimentationsbehälter und mindestens ein Membranfiltrationsmodul, insbesondere ein Querstrom-Membranfiltrationsmodul angeordnet. Der Konzentratauslaß des Moduls ist zum Sedimentationsbehälter und der Auslaß ("Überlauf") des Sedimentationsbehälters für die Flüssigphase ist zum Modul geführt. Vorzugsweise ist das Modul mit einer Mikrofiltrationsmembran ausgerüstet.

Um die zu reinigende Waschlösung zunächst aufzukonzentrieren und erst dann zum Sedimentationsbehälter zu führen und damit ein besseres Sedimentationsverhalten zu erreichen, wie schon oben ausgeführt wurde, ist in der erfindungsgemäßen Anlage die Zulaufleitung für die zu reinigende Waschlauge mit dem Einlaß des Moduls verbunden.

Im folgenden werden Ausführungsbeispiele der Erfindung anhand von Zeichnungen näher erläutert. Es zeigen
- Figur 1: ein Fließbild der Rauchgasentschwefelung nach einem bekannten Verfahren,
- Figur 2: ein entsprechendes Fließbild eines erfindungsgemäßen Ausführungsbeispiels,
- Figur 3: die Verfahrensführung bei der Reinigung der Waschlauge im einzelnen in einem ersten Ausführungsbeispiel der Erfindung,
- Figur 4: das gleiche wie Figur 3, aber nach einem besonders bevorzugten Ausführungsbeispiel,
- Figur 5: eine Einzelheit im Aufbau einer Versuchsanlage und
- Figur 6: eine grafische Darstellung des Verlaufs von Temperatur, Permeatfluß und transmembraner Druckdifferenz in Abhängigkeit von der Zeit als Ergebnis eines Betriebsversuches mit der Anlage nach Figur 5.

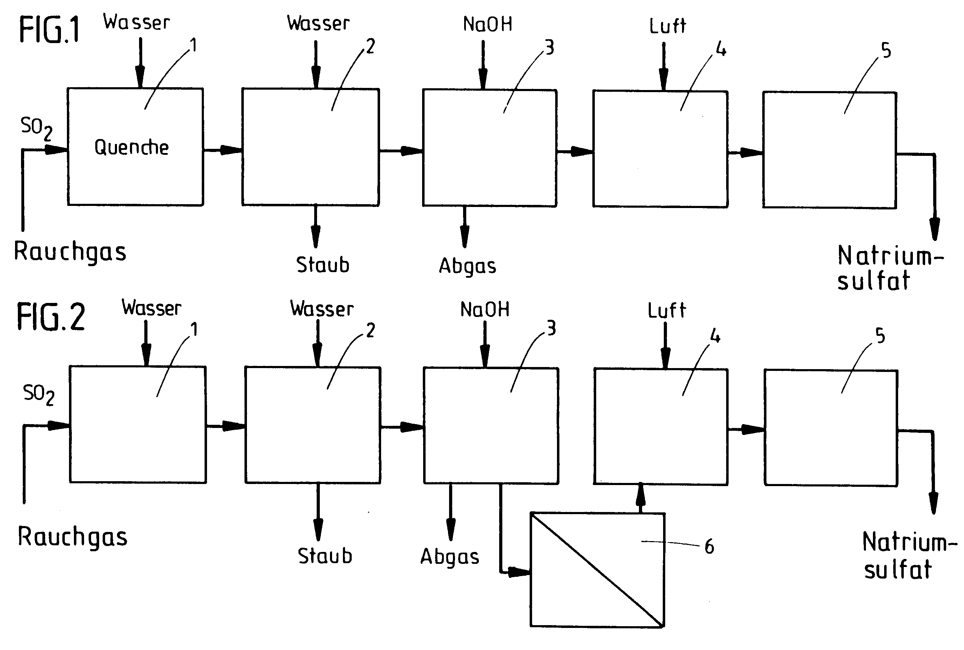

Das in Figur 1 schematisch dargestellte Verfahren zur Rauchgasentschwefelung mit Natronlauge ist bekannt.

Das mit Schwefeldioxid beladene, in einem Elektrofilter vorgereinigte heiße Rauchgas wird in einer ersten Stufe 1 der Vorwäsche, die auch "Quenche" genannt wird, mit Wasser befeuchtet und abgekühlt. Der größte Teil der im Rauchgas noch enthaltenden Restasche sowie Chloride werden in einer zweiten Stufe 2 der Vorwäsche mit Wasser ausgewaschen. Zum Teil wird Schwefeldioxid mit Luftsauerstoff zu Schwefeltrioxid oxidiert und mit dem Waschwasser zu Schwefelsäure umgesetzt. Das mit einem pH-Wert von nahezu 1 sehr saure Waschwasser der Vorwäsche absorbiert kein Schwefeldioxid.

In der Hauptwäsche 3 wird Schwefeldioxid mit einer Natriumsulfit-Lösung aus dem Rauchgas ausgewaschen. Das entstehende Natriumhydrogensulfit wird ständig mit Natronlauge zu Natriumsulfit regeneriert. Der pH-Wert beträgt etwa 7. Der laufend abgezogene, als Ablauge bezeichnete Überschuß an Waschlauge enthält neben Natriumsulfit auch Natriumsulfat aus einer Oxidation eines Teils des Sulfits mit dem Luftsauerstoff. Die Ablauge wird zur Oxidationsstufe 4 gepumpt, und das Sulfit vollständig zu Sulfat oxidiert. Kristallines Natrimsulfat wird in der Kristallisationsstufe 5 gewonnen.

Die Ablauge enthält noch etwa 0,2 g/l schwarze Verunreinigungen, da die Staubabtrennung in Stufe 2 nicht sämtliche Stäube vollständig erfassen kann. Die Teilchen bilden dunkle Einsprengsel im ansonsten weißen Produkt und vermindern den Wert des Zielproduktes Natriumsulfat erheblich. Das Salz ist z. B. für den Einsatz in Waschmitteln unbrauchbar.

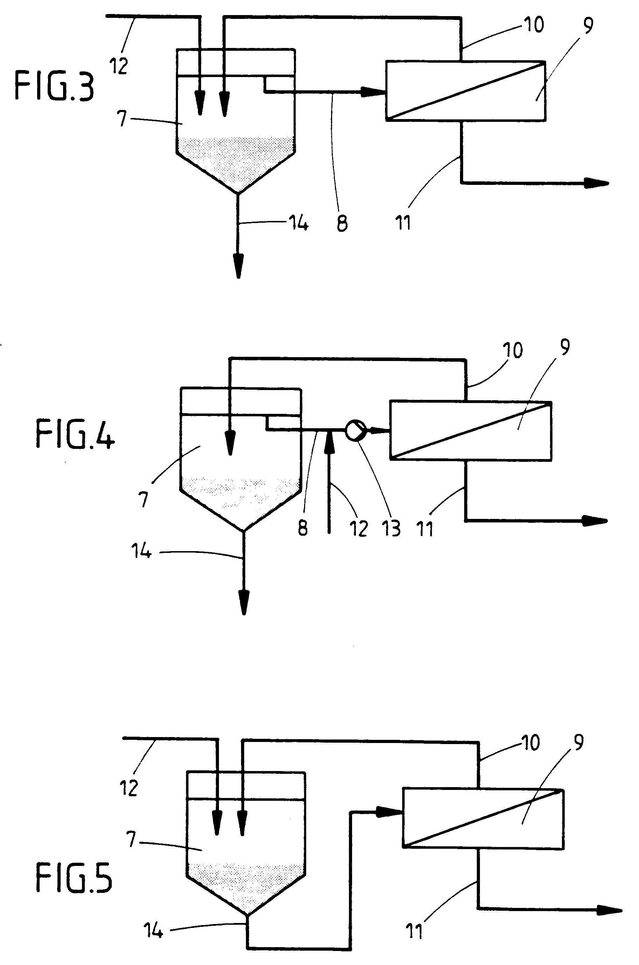

Das erfindungsgemäße Verfahren zur Reinigung der Waschlauge ist in Figur 2 im Überblick dargestellt. Die hier verwendeten Bezugszahlen haben die gleichen Bedeutungen wie in Figur 1. Zusätzlich zu der Anordnung nach Figur 1 ist hier eine Kombination 6 aus einer Querstrom-Mikrofiltrationseinheit und einem Sedimentationsbehälter zwischen der Rauchgaswäsche 3 und der Oxidationsstufe 4 geschaltet. Im einzelnen wird dies in Figur 3 verdeutlicht. Hier wird eine der möglichen Auführungsformen des erfindungsgemäßen Reinigungsverfahrens für die Waschlauge dargestellt. Die Waschlauge wird zunächst in den Sedimentationsbehälter 7 eingeleitet und der Überlauf 8 in dem Mikrofiltrations-Modul 9 aufkonzentriert, insbesondere um mindestens den Faktor 10 gegenüber dem Feed. Das Konzentrat 10 wird zurück in den Sedimentationsbehälter 7 geführt, so daß die nun konzentriertere Suspension im Behälter 7 sedimentieren kann. Das Permeat 11, die gereinigte Waschlauge, wird weiterverarbeitet, um das Wertprodukt Natriumsulfat zu erhalten.

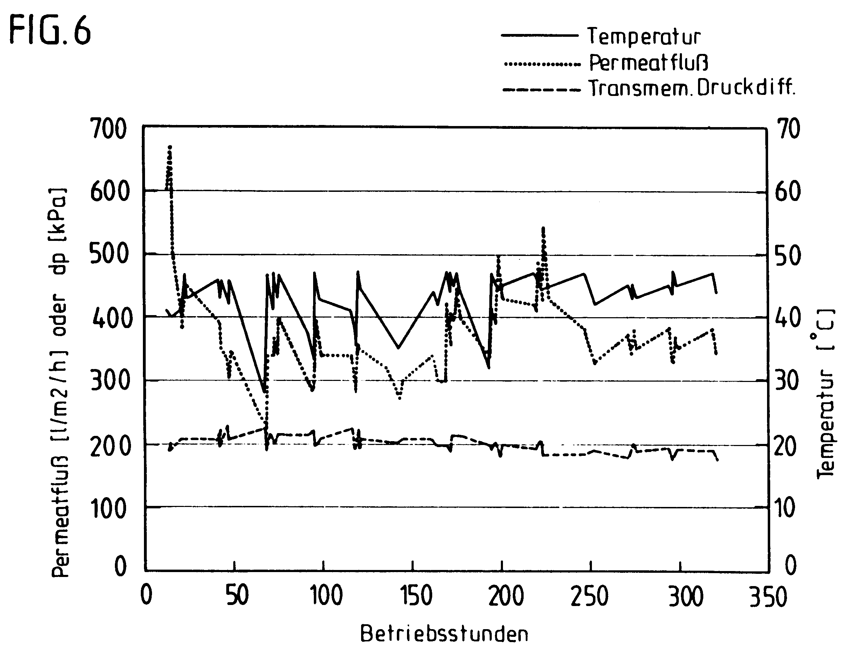

In einem anderen, noch vorteilhafteren Ausführungsbeispiel des erfindungsgemäßen Verfahrens, das in Figur 4 dargestellt ist, wird die Waschlauge ohne den Umweg über den Sedimentationsbehälter 7 direkt in das Mikrofiltrations-Modul 9 eingeleitet. Das Konzentrat 10 wird wiederum aus dem Mikrofiltrations-Modul 9 in den Sedimentationsbehälter 7 gegeben. Der Überlauf 8 dieser Vorlage wird auf die Saugseite einer Pumpe 13 zusammen mit dem Feed, der ungereinigten Waschlauge 12 aufgegeben. In diesem Ausführungsbeispiel wird ein besseres Sedimentationsverhalten dadurch erreicht, daß dem Sedimentationsbehälter 7 eine konzentriertere Suspension als im Beispiel nach Figur 3 zugeführt wird. Die durch die Aufkonzentrierung erreichte Abnahme der Menge an in den Behälter 7 eingeleiteter Suspension vermindert außerdem das Aufwirbeln des schon abgesetzten Schlamms.

Der im Behälter 7 sedimentierte Schlamm 14 wird von Zeit zu Zeit, z. B. einmal wöchentlich oder gar monatlich, abgelassen und entsorgt. Die Sedimentation kann durch geschickte Ausführung des Behälters, z. B. durch einen konischen oder schrägen Boden und Lamelleneinsätze nach Art eines Schrägklärers oder andere bekannte vorteilhafte Ausführungsformen von Sedimentationsbehältern verstärkt werden.

Das erfindungsgemäße Verfahren ist insbesondere für die kontinuierliche Fahrweise geeignet.

Die Eignung des erfindungsgemäßen Verfahrens wurde durch einen Betriebsversuch im Kraftwerk des Anmelders nachgewiesen. Hier wurde als Pilotanlage eine Mikrofiltrationsanlage mit automatischer periodischer Strömungsumkehr und automatischer periodischer Rückspülung der Firma Schünemann & Co., Bremen eingesetzt. Die Membranfläche betrug 1 m². Die Anlage wurde im Bypass installiert. Es wurden Membranen der Firma Mikrodyn, Wuppertal aus Polypropylen mit einer Porenweite von 0,2 µm und einem Einzelröhrendurchmesser von 5,5 mm eingesetzt.

Der wesentliche Teil der Pilotanlage ist in Figur 5 schematisch dargestellt. Die hier verwendeten Bezugszeichen entsprechen denen der vorangegangenen Figuren. In diesem Versuch wurde geprüft, bis zu welcher Höhe aufkonzentiert werden kann, ohne daß der Permeatfluß in unwirtschaftliche Größenordnungen abfällt. Daher wurde, um zu Versuchszwecken die Mikrofiltrationsmembran besonders stark zu belasten, nicht der Überlauf aus dem Sedimentationsbehälter 7 zur Mikrofiltration 9 geleitet, sondern die am Boden des Sedimentationsbehälters 7 sehr viel stärker konzentriertere Lauge wurde zusammen mit dem schon angesammelten Schlamm 14 unten entnommen und zum Modul 9 geleitet. Das Konzentrat 10 floß wieder in die Vorlage 7 zurück. Das Permeat 11, die gereinigte Waschlauge, wurde wie in den Ausführungsbeispielen nach den Figuren 3 und 4 in die zur Kristallisation führende Leitung gepumpt.

Da das Konzentrat im Sedimentationsbehälter 7 belassen und dieser erneut mit der zu reinigenden Waschlauge 12 aufgefüllt und weiter mikrofiltriert wurde, nahm die Konzentration der Verunreinigungen in der im Behälter 7 befindlichen Flüssigkeit mit der Zeit immer weiter zu. Einmal in der Woche wurde die Filtrationsanlage mit warmen Wasser von etwa 50 bis 60 °C gespült. Der Sedimentationsbehälter 7 wurde während des Versuches nicht gereinigt.

Die Anlage wurde über 330 Betriebsstunden kontinuierlich betrieben. Dabei ist zu berücksichtigen, daß die Anlage über Nacht im Kreislauf gefahren wurde, so daß das Permeat in dieser Zeit in die Vorlage 7 zurückgeführt wurde.

Figur 6 zeigt die Versuchsergebnisse. Aufgetragen sind die Temperatur der Ablauge in der Mikrofiltrationsanlage, der Permeatfluß, bezogen auf die Membranfläche, und die transmembrane Druckdifferenz. Die Eignung des erfindungsgemäßen Verfahrens in der industriellen Praxis zeigt sich insbesondere an zwei Ergebnissen. Obwohl von 23 m³ Waschlauge ausgegangen wurde und etwa 20 Liter Konzentrat und entsprechend fast 23 m³ Permeat gewonnen wurde, und damit um den Faktor 1 000 aufkonzentriert wurde, bleibt die erforderliche transmembrane Druckdifferenz über die Versuchsdauer konstant und steigt nicht an. Noch wichtiger ist eine zweite Beobachtung. Der Permeatfluß nimmt trotz der starken Aufkonzentrierung nicht ab, sondern hängt sehr viel stärker von der Temperatur als von der Betriebsdauer der Anlage ab.

Die im Versuch erhaltenen 20 Liter Konzentrat sedimentierten nach etwa 10 Stunden weiter ab, und das Restschlammvolumen betrug nur etwa 1 Liter. Diese gegenüber dem Volumen von 23 m³ gereinigter Waschlauge anfallende äußerst geringe Menge an zu entsorgendem Restschlamm zeigt die Umweltfreundlichkeit des erfindungsgemäßen Verfahrens.

### Bezugszeichenliste

- 1: erste Stufe (Quenche) der Vorwäsche
- 2: zweite Stufe der Vorwäsche
- 3: Hauptwäsche
- 4: Oxidationsstufe
- 5: Kristallisationsstufe, Kristallisator
- 6: Kombination
- 7: Sedimentationsbehälter
- 8: Überlauf
- 9: Mikrofiltrations-Modul bzw. -Anlage
- 10: Konzentrat
- 11: Permeat
- 12: Waschlauge, Zulaufleitung
- 13: Pumpe
- 14: Schlamm

## Patentansprüche

1. Verfahren zur Rauchgasentschwefelung, wobei man das Rauchgas, bevorzugt nach einer Reinigung von Flugasche und anderen festen Partikeln, mit einer Alkali enthaltenden Lauge, insbesondere Natronlauge, wäscht und dann das nach einer Oxidationsstufe erhaltene Alkalisulfat kristallisiert,
**dadurch gekennzeichnet**,
daß man nach der Wäsche des Rauchgases die Waschlauge, insbesondere kontinuierlich, in einem aus einer Sedimentation und einer Membranfiltration, bevorzugt einer Querstrom-Membranfiltration, kombinierten Aufarbeitungsschritt reinigt, wobei man die Feststoffe im aus der Membranfiltration erhaltenen Konzentrat durch Sedimentieren zumindest teilweise abtrennt, die Restflüssigkeit zur Membranfiltration zurück- und damit im Kreis führt und das aus der Membranfiltration erhaltene Permeat weiterverarbeitet.

2. Verfahren nach Anspruch 1,
**dadurch gekennzeichnet**,
daß man die zu reinigende Waschlauge zuerst der Membranfiltration unterwirft.

3. Verfahren nach Anspruch 1 oder 2,
**dadurch gekennzeichnet**,
daß man bei der Membranfiltration ein Verhältnis von Permeat und Konzentrat von mindestens 10 einstellt.

4. Verfahren nach einem der Ansprüche 1 bis 3,
**dadurch gekennzeichnet**,
daß man die Membran zur Reinigung mit Permeat, insbesondere periodisch, rückspült.

5. Verfahren nach einem der Ansprüche 1 bis 4,
**dadurch gekennzeichnet**,
daß man Membranen mit Porendurchmessern einsetzt, die mindestens um den Faktor 5 kleiner als der mittlere Durchmesser der in der Waschlauge suspendierten Partikel sind.

6. Verfahren nach einem der Ansprüche 1 bis 5,
**dadurch gekennzeichnet**,
daß die Membran aus einem Polymer, insbesondere aus Polypropylen besteht.

7. Verfahren nach einem der Ansprüche 1 bis 5,
**dadurch gekennzeichnet**,
daß die Membran aus Keramik, insbesondere aus Aluminiumoxid oder Aluminiumoxid/Zirkonoxid oder Graphit/Zirkonoxid oder Siliciumcarbid besteht.

8. Anlage zur Rauchgasentschwefelung mit einem Gaswäscher (3) der mit einer Alkali enthaltenden Lauge, insbesondere Natronlauge betreibbar ist und dem bevorzugt eine Abtrennstufe (2) für Flugasche und andere Feststoffe aus dem Rauchgas vorgeschaltet ist und dem eine Oxidationsstufe (4) zur Herstellung von Alkalisulfat und ein Kristallisator (5) nachgeschaltet ist,
**dadurch gekennzeichnet**,
daß zwischen dem Wäscher (3) und dem Kristallisator (5) mindestens ein Sedimentationsbehälter (7) und mindestens ein Membranfiltrationsmodul (9), insbesondere ein Querstrom-Membranfiltrationsmodul, angeordnet ist, daß der Konzentratauslaß des Moduls (9) zum Sedimentationsbehälter (7) und der Überlauf (8) des Sedimentationsbehälters (7) zum Modul (9) geführt ist.

9. Anlage nach Anspruch 8,
**dadurch gekennzeichnet**,
daß das Modul (9) mit einer Mikrofiltrationsmembran ausgerüstet ist.

10. Anlage nach Anspruch 8 oder 9,
**dadurch gekennzeichnet**,
daß die Zulaufleitung (12) für die zu reinigende Waschlauge mit dem Einlaß des Moduls (9) verbunden ist.

## Claims

1. A process for desulfurizing flue gases, the flue gas being scrubbed with an alkali-metal-containing liquor, more especially sodium hydroxide, preferably after the removal of fly ash and other solid particles, and the alkali metal sulfate obtained after an oxidation stage being subsequently crystallized, characterized in that, after scrubbing of the flue gas, the scrubbing liquor is purified, more particularly continuously, in a combined working-up step consisting of sedimentation and membrane filtration, preferably crossflow membrane filtration, the solids in the concentrate obtained after the membrane filtration being at least partly removed by sedimentation, the residual liquid is returned to the membrane filtration and hence circulated and the permeate obtained from the membrane filtration is further processed.

2. A process as claimed in claim 1, characterized in that the scrubbing liquor to be purified is first subjected to the membrane filtration.

3. A process as claimed in claim 1 or 2, characterized in that a ratio of permeate to concentrate of at least 10:1 is adjusted in the membrane filtration.

4. A process as claimed in any of claims 1 to 3, characterized in that the membrane is cleaned by back-washing, more particularly periodic back-washing, with permeate.

5. A process as claimed in any of claims 1 to 4, characterized in that the membranes used have pore diameters smaller by a factor of at least 5 than the average diameter of the particles suspended in the scrubbing liquor.

6. A process as claimed in any of claims 1 to 5, characterized in that the membrane consists of a polymer, more especially polypropylene.

7. A process as claimed in any of claims 1 to 5, characterized in that the membrane consists of ceramic, more especially aluminum oxide or aluminium oxide/zirconium oxide or graphite/zirconium oxide or silicon carbide.

8. An installation for desulfurizing smoke gases comprising a gas scrubber (3) which is designed to be operated with an alkali-metal-containing liquor, more especially sodium hydroxide, and which preferably is preceded by a separation stage (2) for the removal of fly ash and other solids from the flue gas and followed by an oxidation stage (4) for the preparation of alkali metal sulfate and by a crystallizer (5), characterized in that at least one sedimentation tank (7) and at least one membrane filtration module (9), more especially a crossflow membrane filtration module, are arranged between the scrubber (3) and the crystallizer (5) and in that the concentrate outlet of the module (9) is directed to the sedimentation tank (7) while the overflow (8) of the sedimentation tank (7) is directed to the module (9).

9. An installation as claimed in claim 8, characterized in that the module (9) is equipped with a microfiltration membrane.

10. An installation as claimed in claim 8 or 9, characterized in that the feed line (12) for the scrubbing liquor to be purified is connected to the inlet of the module (9).

## Revendications

1. Procédé de désulfuration des gaz de fumée, dans lequel on lave le gaz de fumée, de préférence après une épuration des cendres volantes et d'autres particules solides avec une lessive contenant un alcali, en particulier de la lessive de soude, et ensuite on fait cristalliser le sulfate alcalin obtenu après une étape d'oxydation,
caractérisé en ce que
l'on épure après le lavage du gaz de fumée, la lessive de lavage en particulier en continu, dans une étape de traitement combinée consistant en une sédimentation et en une filtration sur membrane, de préférence une filtration sur membrane à courants croisés, dans laquelle on sépare au moins partiellement les matières solides dans le concentré obtenu à partir de la filtration sur membrane, par sédimentation, on ramène le liquide résiduel vers la filtration sur membrane et ainsi on le recycle, et on purifie encore le perméat obtenu à partir de la filtration sur membrane.

2. Procédé selon la revendication 1,
caractérisé en ce que
l'on soumet la lessive de lavage à purifier en premier lieu à la filtration sur membrane.

3. Procédé selon la revendication 1 ou la revendication 2,
caractérisé en ce que
l'on ajuste lors de la filtration sur membrane un rapport de perméat et de concentré d'au moins 10.

4. Procédé selon l'une des revendications 1 à 3,
caractérisé en ce que
l'on rince à nouveau, la membrane en vue de la purification avec le perméat, en, particulier périodiquement.

5. Procédé selon l'une des revendications 1 à 4,
caractérisé en ce que
l'on met en oeuvre des membranes, avec des diamètres de pores qui sont au moins d'un facteur 5 plus petites que le diamètre moyen des particules en suspension dans les lessives de lavage.

6. Procédé selon l'une des revendications 1 à 5,
caractérisé en ce que
la membrane est constituée d'un polymère, en particulier de polypropylène.

7. Procédé selon l'une des revendications 1 à 5,
caractérisé en ce que
la membrane est constituée de céramique, en particulier d'oxyde d'aluminium, ou d'oxyde d'aluminium/oxyde de zirconium ou de graphite/oxyde de zirconium ou de carbure de silicium.

8. Installation pour la désulfuration des gaz de fumée, avec un laveur de gaz (3), qui doit être conduit avec une lessive contenant un alcali, en particulier de la lessive de soude, et auquel est préconnectée de préférence une étape de séparation (2) pour les cendres volantes et autres matières solides provenant du gaz de fumée et auquel sont post-connectés une étape d'oxydation (4) en vue de la production de sulfate de métal alcalin et un cristallisateur(5),
caractérisée en ce qu'
entre le laveur (3) et le cristrallisateur (5) au moins un récipient de sédimentation (7) et au moins un module de filtration sur membrane (9) - en particulier un module de filtration sur membrane à courants croisés - sont disposés, en ce que la décharge de concentré du module (9) est conduite au récipient de sédimentation (7) et le trop plein (8) du récipient de sédimentation (7) est conduit au module (9).

9. Installation selon la revendication 8,
caractérisée en ce que
le module (9) est équipé d'une membrane pour microfiltration.

10. Installation selon la revendication 8 ou la revendication 9,
caractérisée en ce que
la conduite d'amenée (12) pour la lessive de lavage à purifier est reliée à l'admission du module (9).
